# EUROPÄISCHE PATENTSCHRIFT

(11) **EP 0 598 296 B1**
(45) Veröffentlichungstag und Bekanntmachung des Hinweises auf die Patenterteilung: **22.01.1997**
(21) Anmeldenummer: 93118049.1
(22) Anmeldetag: 08.11.1993
(51) Int. Cl.: H02K 15/04

(54) **Verfahren und Vorrichtung zur Herstellung einer Wellenwicklung**
Method and device to produce a wave winding
Procédé et dispositif pour fabriquer un enroulement ondulé

(30) Priorität: 16.11.1992 DE 4238467
(43) Veröffentlichungstag der Anmeldung: 25.05.1994
(73) Patentinhaber: ELMOTEC ELEKTRO-MOTOREN-TECHNIK GmbH, D-61184 Karben (DE)
(72) Erfinder: Sadiku, Sadik, Dipl.-Ing., D-63543 Neuberg 1 (DE); Gassner, Edmund, D-61130 Nidderau (DE)
(74) Vertreter: Linser, Heinz

(56) Entgegenhaltungen:
- DD-A- 289 456
- DE-A- 2 351 952
- DE-A- 3 343 390
- JP-B- 5 653 936
- SU-A- 1 159 118

## Beschreibung

Die Erfindung betrifft zwei Verfahren zur Herstellung einer Wellenwicklung für Statoren elektrischer Maschinen mit den Merkmalen des Oberbegriffs des Anspruchs 1 oder 2. Ferner betrifft die Erfindung zwei Vorrichtungen zur Herstellung einer Wellenwicklung für Statoren elektrischer Maschinen (JP 5653936 B2).

Es ist bei der Herstellung von Statoren vorherrschende Praxis, Spulen auf einer Schablone vorzufertigen, in einen Einzieher abzustreifen und dann axial in die Statornuten einzuziehen. Schwierigkeiten bereitet es, eine Wellenwicklung direkt über dem Einziehwerkzeug oder Übertragungswerkzeug herzustellen oder zu übertragen.

Aus der DE-PS 33 43 390 sind ein Verfahren und eine Vorrichtung zum Wickeln und Einbringen einer Wellenwicklung in die Nuten von Statoren bekannt. Bei dieser Vorrichtung wird erst eine komplette Spule auf einen Satz im Kreis angeordnete erste Formelemente gewickelt, und anschließend führt ein Satz zweiter Formelemente von außen gegen die Spule und verformt diese. Im gleichen Zug mit dem radialen Hub der zweiten Formelemente müssen die ersten Formelemente solange nachgeben, bis eine Wellenwicklung geformt ist. Es sind auch noch weitere Veröffentlichungen bekannt, die ähnliche Konstruktionen aufweisen. Im Gegensatz zu der Vorrichtung nach der JP 56-53936 B2 haben diese Vorrichtungen eines gemeinsam: sie wickeln erst eine annähernd runde Spule mit mehreren Windungen und verformen diese dann - alle Windungen gemeinsam - zu einer Wellenwicklung. Diese Methode ist sehr aufwendig und störanfällig, weil die Vorrichtung aus einer Vielzahl bewegbarer Teile besteht. Um eine gleichmäßige Qualität einer Wellenwicklung zu erhalten, müssen die ersten Formelemente mit den zweiten Formelementen beim Formen synchron verfahren oder mit aufwendigen Dämpfungszylindern ausgerüstet werden. Da alle Windungen auf einmal verformt werden, ist ein relativ hoher Kraftaufwand erforderlich und hiermit verbunden die entsprechend chend robustere Dimensionierung der Vorrichtung. Da erst geformt wird, wenn die komplette Wicklung auf Formelemente vorgewickelt ist, entsteht ein hoher Fertigungszeitverlust, weil beim Formvorgang und Übertragen der Wicklung in den Aufnehmer die Wickelvorrichtung stillstehen muß.

Andererseits ist die Vorrichtung nach der JP 56-53936 B2 offenbar nur für die Wicklung einlagiger Wellenwicklungen vorgesehen.

Der Erfindung liegt die Aufgabe zugrunde, ein Verfahren der eingangs bezeichneten Art und eine zu dessen Durchführung geeignete Vorrichtung zu schaffen, mit deren Hilfe die Herstellung stellung von üblichen Wellenwicklungen vereinfacht und mit geringerem Aufwand gefertigt werden kann.

Vorstehende Aufgabe wird nach dem Vorschlag der Erfindung verfahrensgemäß durch die kennzeichnenden Merkmale der Ansprüche 1 oder 2 gelöst. Während des Wickelns läuft die Wickeldüse zusammen mit den Formelementen synchron, wobei bei jeder Umdrehung der Wickeldüse oder der Wickelschablone eine Wellenwindung hergestellt wird, welche kontinuierlich axial abgestreift wird.

Ein Vorteil besteht gemäß der Erfindung darin - bedingt durch das Herstellungsverfahren, bei dem, wie im Fall der JP 56-53936 B2, kontinuierlich ein Wickeln, Formen, Wickeln, Formen usw. erfolgt, daß nach Beendigung des Wickelvorgangs auch die Wellenwicklung geformt ist. Sie braucht dann nur noch in einen Aufnehmer abgestreift zu werden.

Für die Durchführung den neuen Verfahren werden Vorrichtungen mit den Merkmalen der Ansprüche 5 oder 6 vorgeschlagen.

Die Formelemente sind an ihrem unteren Drahtführungsende als Pilzkopf mit Drahtführungsrille ausgebildet, dergestalt, daß bei einem Verschwenken der Formelemente mit dem Pilzkopf nach radial innen die Drahtführungsrille in die Wickelebene eingreift.

Nach Herstellung einer Wellenwindung schieben Abstreifer diese Windung axial auf der Wickelschablone in Richtung auf einen Aufnehmer zuvor.

Bei den bereits beschriebenen Vorrichtungen, bei denen die Wickeldüse um die Wickelschablone herumwickelt, besteht die Möglichkeit, einzelne Teilspulen einer Phase mit Schaltverbindungen herzustellen. Dies erfolgt so, daß eine komplette Wellenwicklung eine Teilwicklung einer Phase auf der Schablone erstellt, und diese in einen Aufnehmer abgestreift wird. Jetzt wird der Wickeldraht nicht abgeschnitten, sondern in einer Längenziehvorrichtung gehalten. Nach dem Indexieren des Aufnehmers fährt die Längenziehvorrichtung an die Schablone, und die Wickeldüse kann zu einer neuen Teilspule starten.

Die Erfindung wird nachstehend anhand von in der Zeichnung dargestellten Ausführungsbeispielen näher erläutert. Es zeigen:
- Fig. 1: eine Wickelvorrichtung für eine Wellenwicklung mit stehender Schablone;
- Fig. 2: eine Draufsicht auf einen Aufnehmer mit Teilen einer Schablone nach Fig. 1;
- Fig. 3: eine Wickelvorrichtung ähnlich Fig. 1, aber mit einem anderen Auslenkungsantrieb der Formelemente;
- Fig. 4: eine mögliche Kurvenbahn eines Pilzkopfes.

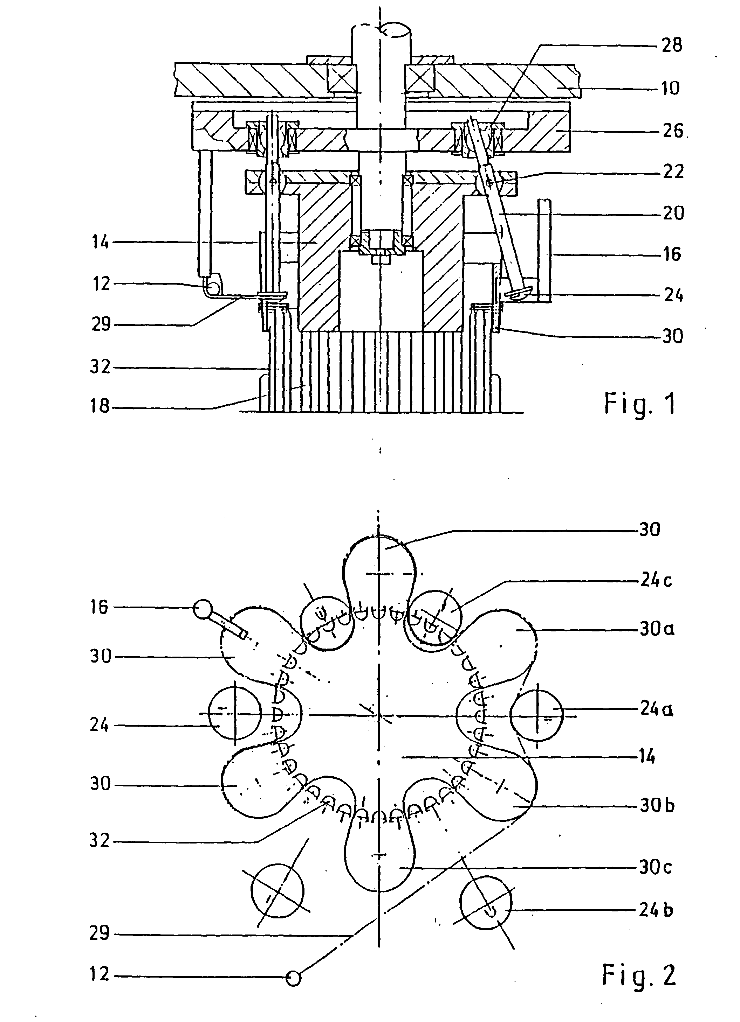

Die in Fig. 1 gezeigte Wickelvorrichtung hat ein Maschinengehäuse 10, an welchem die nachfolgend beschriebenen Teile gelagert sind. Die Wickelwerkzeuge bestehen in herkömmlicher Ausführung aus einer rotierend antreibbaren Wickeldüse 12, einer während des Wickelvorgangs drehfest gehaltenen Schablone 14 mit Abstreifer 16 und einem Aufnehmer 18. Die Schablone 14 kann durch ein hier nicht gezeigtes Haltegetriebe oder über den Aufnehmer 18 gegen Mitdrehen gehalten werden. An der Schablone 14 sind Formelemente oder Formfinger 20 so gelagert, daß sie in der Schablone 14 einen Drehpunkt 22 haben, wobei der untere Bereich der Formfinger 20, ein Pilzkopf 24, radial schwenkbar ist. Die Schwenkbarkeit des Pilzkopfes 24 wird dadurch erreicht, daß eine mit der Wickeldüse 12 verbundene und mitdrehbare Trägerplatte 26 im Bereich der Schablone 14 eine Kurvenbahn 28 aufweist und diese im oberen Bereich der Formelemente oder Formfinger 20 eingreift, also über dem Drehpunkt 22 die Formfinger 20 der Kurvenbahn 28 entsprechend führt, so daß wie gezeichnet der linke Formfinger 20 senkrecht und der rechte mit seinem Pilzkopf 24 nach außen gesteuert wird. Bewegt sich jetzt die Wickeldüse 12 um die Schablone 14, so werden die Formfinger 20, speziell die Pilzköpfe 24, radial raus- und reingeschwenkt.

Fig. 2 zeigt eine Draufsicht auf den Aufnehmer 18, Teil der Schablone 14 und die Kontur einer Wellenwicklung. Die Schablone 14 weist eine Außenkontur wie eine Wellenwicklung auf, wobei die äußeren Nocken 30 zur Verformung der Spule unbedingt erforderlich sind. Die innere Kontur der Wellenwicklung wird durch die Formfinger 20 gebildet.

Während des Wickelns rotiert die Wickeldüse 12 um die Schablone 14 und legt den Draht 29 auf die Nocken 30. Nachdem der einzelne Draht 29 auf die Nocken 30a und 30b gelegt wurde, kommt anschließend der Pilzkopf 24 - gesteuert durch die Kurvenbahn 28 - zwischen die Nocken 30a und 30b und verformt den Draht 29 zu einer Welle. Dieser einzelne Schritt erfolgt bei jeder Welle einer Wellenwindung, bis eine komplette Windung gefertigt ist.

Die Steuerung der Pilzköpfe 24 durch den Drehpunkt 22 an der Schablone 14 und die Trägerplatte 26 mit der Kurvenbahn 28 kann ganz individuell ausgelegt sein. Voraussetzung ist jedoch, daß der Pilzkopf 24, wie in Fig. 2 gezeigt, die Windung bzw. den einzelnen Drahtabschnitt zwischen den Nocken 30a und 30b der Schablone 14 aus einem äußeren Bereich der Lamellen 32 in einen inneren Bereich der Lamellen 32 verformt.

Die fertig geformten Wellenwindungen werden durch axial hin- und hergehend antreibbare Abstreifer 16 während des Wickelns von der Schablone 14 abgestreift und in dem aus einem Kranz aufrecht stehender paralleler Finger oder Lamellen 32 bestehenden Aufnehmer 18 gesammelt. Der Aufnehmer 18 kann ein Einziehwerkzeug oder eine Übertragungszange sein.

Um einen einwandfreien Übergang der Wellenwindungen von der Schablone 14 zum Aufnehmer 18 zu gewährleisten, taucht die Schablone 14 teilweise in den Aufnehmer 18 ein.

Die Steuerung der Pilzköpfe 24 nach Fig. 1 zeigt ein zusätzliches Merkmal auf, denn wie auf der linken Seite gezeichnet, ist der Formfinger 20 senkrecht. Verfährt jetzt die Kurvenbahn 28 um 180°, so schwenkt der Formfinger so aus, wie auf der rechten Seite gezeigt, nach außen. Hierbei schwenkt der Pilzkopf 24 nicht nur nach außen, sondern etwas nach oben und somit aus dem Bereich der Wickelebene. Dieses ist dann erforderlich, wenn der Draht 29 aus der Wickeldüse 12 kommend, sich auf die Schablone 14 legt, wie im Beispiel der Fig. 2 auf die Nocke 30b und 30c; dann muß der Pilzkopf 24b aus der Wickelebene heraus geschwenkt sein, um dem Wickeldraht 29 zu ermöglichen, sich auf die Schablone 14 zu legen. Ist erst einmal der Wickeldraht am Pilzkopf 24 vorbei und liegt bereits wie in Fig. 2 gezeigt auf den Nocken 30a und 30b, dann kann der Pilzkopf 24a ungehindert nach innen und gleichzeitig nach unten schwenken und auf seinem Weg den Draht 29 mitnehmen und zu einer Welle verformen.

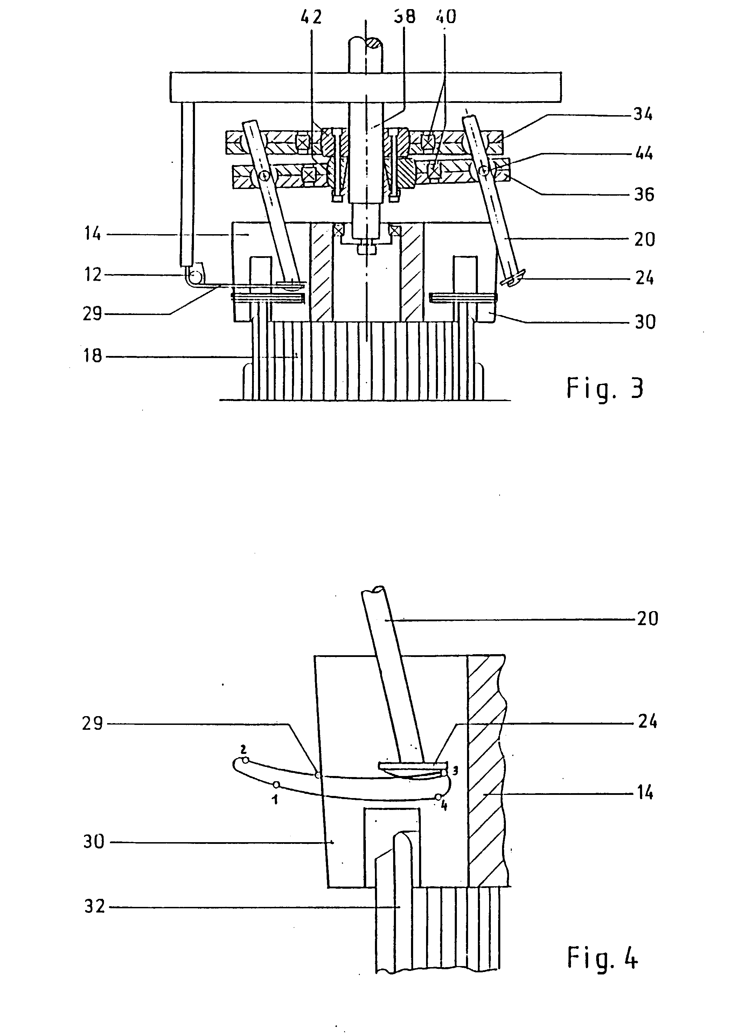

Die in Fig. 3 gezeigte Wickelvorrichtung unterscheidet sich von der Fig. 1 in ihrer Anwendung nur in der Auslenksteuerung der Formfinger 20. Auch hier ist eine antreibbare Wickeldüse 12 vorhanden, die um eine stehende Schablone 14 rotiert und Drahtwindungen auf außenliegende Nocken 30 ablegt, um anschließend mit den Formfingern 20 zwischen die Nocken 30 zu fahren und somit den Draht 29 in Wellen zu verformen. Die Schablone 14 und beide Führungsscheiben, eine Haltescheibe 34 und eine Taumelscheibe 36, in denen die Formfinger 20 gelagert sind, werden durch ein gebräuchliches, hier nicht gezeigtes Haltegetriebe gegen Verdrehung gehalten. Die beiden Führungsscheiben 34 und 36 sind an einer drehbaren Welle 38, die mit der Wickeldüse 12 im Beispielsfall synchron dreht, angeflanscht, jedoch durch die Lagerung 40 gegen Mitdrehen getrennt. Über zwei Kalottenlager 42 können die beiden Führungsscheiben 34 und 36 in ihrer Taumelbewegung eingestellt werden und gleichzeitig können die Kalottenlager 42 exzentrisch auf der Welle 38 angeflanscht sein.

Die Formfinger 20 sind in der Taumelscheibe 36 in einem Drehpunkt 44 gelagert und in der Haltescheibe 34 führend gehalten. Im Beispielsfall nach Fig. 3 wird die Haltescheibe 34 erst einmal nur exzentrisch und die Taumelscheibe 36 entgegengesetzt exzentrisch ausgelenkt. Somit entsteht eine relativ große Auslenkung der Formfinger 20 im Bereich der Pilzköpfe 24. Ist außerdem die Taumelscheibe 36 am Kalottenlager 42 versetzt befestigt, so entsteht ein zusätzlicher axialer Hub der Formfinger 20.

Es gibt hierbei eine Vielzahl von Einstellungsvarianten, insbesondere, wenn man zusätzlich die Haltescheibe 34 mittaumeln läßt oder die Exzentrizität der Kalottenlager 42 um 90° versetzt.

Eine der besten Einstellungen ist, wenn die Formfinger 20 den Pilzkopf 24 so führen, daß einerseits eine Verformung des Drahtes stattfindet und andererseits an der äußeren Auslenkung der Draht 29 aufgenommen wird und im inneren Bereich (innerer Wendepunkt) der Draht 29 heruntergedrückt und abgegeben wird.

In Fig. 4 ist eine mögliche Kurvenbahn des Pilzkopfes 24 gezeigt; hierbei schwenkt der Pilzkopf 24 aus einer Position 1 in eine Position 2 und in weitere Positionen 3 und 4 bis zum Anfang zurück. In der Position 2, in der der Pilzkopf 24 die höchste Stellung erreicht, wird der Draht 29 von der Wickeldüse 12 kommend, auf die Nocken 30 gelegt und vom Pilzkopf 24 auf dem Weg von Position 2 zur Position 3 mitgenommen. Von der gezeichneten Position 3 in die Position 4 senkt sich der Pilzkopf 24 ab und drückt somit den Draht 29 herunter und gibt ihn gleichzeitig frei. Der Rückhub von Position 4 in Position 1 und 2 ist eine aufwärtsgerichtete Bewegung. In Fig. 4 kann man auch gut erkennen, daß der Draht 29 aus einem äußeren Bereich der Lamellen 32 in den inneren Bereich der Lamellen 32 geführt gehalten und verformt wird.

Abgesehen von den in Fig. 1 und Fig. 3 gezeigten Varianten, sind auch noch andere möglich. man kann z.B. in der Schablone 14 die Formfinger 20 so lagern, daß der Pilzkopf 24 nur waagerecht ein- und ausschwenkt. Dieses hat jedoch den Nachteil, daß der Draht beim Wickeln unter dem Pilzkopf durchrutschen muß und sein Auffangen anschließend fehlerhaft sein kann.

Die Wickelvorrichtungen nach Fig. 1 und 3, sind universell einsetzbar und sogar bei kleinen Pakethöhenänderungen können diese einfach durch Nachstellen des Hubs der Formfinger eingestellt werden. Größere Pakethöhenänderungen können durch radiale Einstellung der Nocken 30 vorgenommen werden. Die einfachste, in den Zeichnungen nicht gezeigte Ausführung ist, die Nocken 30 einzeln radial einzustellen. Hierbei können Stifte an den Nocken 30 in vorbestimmte Bohrungen der Schablone arretieren und eine gleichmäßige Einstellung garantieren. Eine andere nicht gezeigte Möglichkeit ist, die Nocken 30 auf einer festen und einer verdrehbaren Scheibe anzuordnen.

In der festen Scheibe sitzt die Nocke 30 mit einem Zapfen in einem radialen Schlitz, und in der verdrehbaren Scheibe sitzt die Nocke 30 mit ihrem Zapfen in einer Kurvenbahn, so daß bei Drehen der verdrehbaren Scheibe alle Nocken 30 gleichzeitig radial verfahren.

## Patentansprüche

1. Verfahren zur Herstellung einer Wellenwicklung für Statoren elektrischer Maschinen, wobei einzelne Windungsabschnitte auf einer Wickelschablone während des Wickelns durch mit einer Radialkomponente bewegbare Form Finger (20) kontinuierlich und nacheinander zu einer Wellenwindung geformt werden, **dadurch gekennzeichnet, daß** die Form Finger (20) in der Wickelschablone (14) und in einer Trägerplatte (26) Drehpunkte (22) haben und jeweils um diese Drehpunkte im wesentlichen radial, sowie auch in die Wickelebene hinein und aus dieser heraus schwenkbar sind.

2. Verfahren zur Herstellung einer Wellenwicklung für Statoren elektrischer Maschinen, wobei einzelne Windungsabschnitte auf einer Wickelschablone während des Wickelns durch mit einer Radialkomponente bewegbare Form Finger (20) kontinuierlich und nacheinander zu einer Wellenwindung geformt werden, **dadurch gekennzeichnet, daß** die Form Finger (20) in Führungsscheiben (34 und 36) Drehpunkte (44) haben und jeweils um diese Drehpunkte im wesentlichen radial, sowie auch in die Wickelebene hinein und aus dieser heraus schwenkbar sind.

3. Verfahren nach Anspruch 1 oder 2, **dadurch gekennzeichnet,** daß während des Wickelns die Wickeldüse (12) zusammen mit den Form Fingern (20, 24,) synchron laufen, wobei bei jeder Umdrehung der Wickeldüse (12) oder der Wickelschablone eine Wellenwindung hergestellt wird, welche kontinuierlich axial abgestreift werden.

4. Verfahren nach Anspruch 1, 2 oder 3**, dadurch gekennzeichnet,** daß nach dem Wickeln alle bzw. die restlichen Wellenwindungen von der Wickelschablone (14) in einem Zug in den Aufnehmer (18) abgestreift werden.

5. Vorrichtung zur Durchführung des Verfahrens nach einem der Ansprüche 1, 2 oder 4, bei dem einzelne Windungsabschnitte zwischen zwei Nocken (30) einer Wickelschablone durch von außen kommende und in die Zwischenräume zwischen den Nocken (30) eintauchende Form Finger (20) geformt werden, **dadurch gekennzeichnet**, daß die Formfinger (20) durch eine Kurvenbahn (28) zwangsgesteuert sind, wobei die Formfinger in der Wickelschablone (14) ihren Drehpunkt (22 u. 44) haben.

6. Vorrichtung zur Durchführung des Verfahrens nach einem der Ansprüche 1, 3 oder 4, bei dem einzelne Windungsabschnitte zwischen zwei Nocken (30) einer Wickelschablone durch von außen kommende und in die Zwischenräume zwischen den Nocken (30) eintauchende Form Finger (20) geformt werden, **dadurch gekennzeichnet**, daß die Formfinger (20) mittels Führungsscheiben (34 u. 36) zwangsgesteuert sind, wobei die Formfinger in einer Führungsscheibe (34 u. 36) ihren Drehpunkt haben.

7. Vorrichtung nach Anspruch 5 oder 6, **dadurch gekennzeichnet**, daß die Formfinger (20) an ihrem unteren Drahtführungsende als Pilzkopf (24) mit Drahtführungsrillen ausgebildet sind, welche von einem äußeren Bereich in einen inneren Bereich der Lamellen (32) schwenken und der Pilzkopf (24) sich im inneren Bereich der Lamellen (32) absenkt.

8. Vorrichtung nach einem der Ansprüche 4, 5, 6 und 7, **dadurch gekennzeichnet**, daß nach Erstellung einer Wellenwindung Abstreifer (16) diese Windung axial auf der Wickelschablone (14) in Richtung Aufnehmer (18) vorschieben.

## Claims

1. Method for manufacturing a series winding for stators used in electrical machinery, in which individual portions of winding are shaped continuously one after another to produce a series winding during the winding process on a winding former by means of die fingers (20) displaceable by means of a radial component, characterised in that the die fingers (20) have pivot points (22) in the winding former (14) and in a bearing plate (26) and can be pivoted essentially radially about these respective pivot points as well as into and out of the winding plane.

2. Method for manufacturing a series winding for stators used in electrical machinery, in which individual portions of winding are shaped continuously one after another to produce a series winding during the winding process on a winding former by means of die fingers (20) displaceable by means of a radial component, characterised in that the die fingers (20) have pivot points (44) in guide plates (34 and 36) and can be pivoted about these respective pivot points essentially radially as well as into and out of the winding plane.

3. Method as claimed in claim 1 or 2, characterised in that during the winding process, the winding nozzle (12) runs synchronously with the die fingers (20, 24), so that with each rotation of the winding nozzle (12) or the winding former a series winding is produced, which is continuously and axially stripped off.

4. Method as claimed in claim 1, 2 or 3, characterised in that after the winding process, all or the remaining series windings are stripped off from the winding former (14) in one stroke into the receiver (18).

5. Device for implementing the method as claimed in one of claims 1, 2 or 4, in which individual winding portions are shaped between two cams (30) of a winding former by means of die fingers (20) thrusting from the exterior into the intermediate spaces between the cams (30), characterised in that the die fingers (20) are forcibly controlled by means of a cam track (28), the pivot point (22 and 44) of the die fingers being in the winding former.

6. Device for implementing the method as claimed in one of claims 1, 3 or 4, in which individual winding portions are shaped between two cams (30) of a winding former by means of die fingers (20) thrusting from the exterior into the intermediate spaces between the cams (30), characterised in that the die fingers (20) are forcibly controlled by means of guide plates (34 and 36), the pivot point of the die fingers being in a guide plate (34 and 36).

7. Device as claimed in claim 5 or 6, characterised in that the die fingers (20) have at their wire-feeding ends a mushroom head (24) with wire feed grooves, which pivot from an outer area into an inner area of the fins (32) and the mushroom head (24) is lowered in the inner area of the fins (32).

8. Device as claimed in one of claims 4, 5, 6 and 7, characterised in that after producing a series winder, strippers (16) push this winding axially on the winding former (14) in the direction of a receiver (18).

## Revendications

1. Procédé pour la fabrication d'un enroulement ondulé pour des stators de machines électriques, chacune des sections de spire étant mise en forme sur un gabarit de bobinage pendant le bobinage par des doigts de mise en forme (20) mobiles suivant une composante radiale et, ce, en continu et à la suite en un enroulement ondulé, caractérisé en ce que les doigts de mise en forme (20) présentent, dans le gabarit de bobinage (14) et dans une platine (26), des points de rotation (22) et sont pivotants autour de ces points de rotation sensiblement radialement et de manière à entrer et à sortir du plan de bobinage.

2. Procédé pour la fabrication d'un enroulement ondulé pour des stators de machines électriques, chacune des sections de spire étant mise en forme, sur un gabarit de bobinage pendant le bobinage par des doigts de mise en forme (20) mobiles suivant une composante radiale et, ce, en continu et à la suite en un enroulement ondulé, caractérisé en ce que les doigts de mise en forme (20) présentent, dans des disques de guidage (34 et 36), des points de rotation (44) et sont pivotants autour de ces points de rotation sensiblement radialement et de manière à entrer et à sortir du plan de bobinage.

3. Procède selon la revendication 1 ou 2, caractérisé en ce que pendant le bobinage, la buse de bobinage (12) fonctionne en synchronisation avec les doigts de mise en forme (20, 24), à chaque tour de la buse de bobinage (12) ou du gabarit de bobinage, un enroulement ondulé étant créé, lequel est raclé axialement en continu.

4. Procéde selon la revendication 1, 2 ou 3, caractérisé en ce qu'après le bobinage, chaque respectivement tous les enroulements ondulés restants sont raclés du gabarit de bobinage (14) d'un seul coup dans l'extracteur (18).

5. Dispositif pour la mise en oeuvre du procédé selon l'une des revendications 1, 2 ou 4, où des sections de spires sont mises en forme entre deux cames (30) d'un gabarit de bobinage par deux doigts (20) de mise en forme venant de l'extérieur et s'engageant dans les espaces entre les cames (30) caractérisé en ce que les doigs de mise en forme (20) sont à commande forcée par une came (28), les doigts de mise en forme ayant leur point de rotation (22 et 44) dans le gabarit de bobinage (14).

6. Dispositif pour la mise en oeuvre du procédé selon l'une des revendications 1, 3 ou 4, où des sections de spires sont mises en forme entre deux cames (30) d'un gabarit de bobinage par deux doigts (20) de mise en forme venant de l'extérieur et s'engageant dans les espaces entre les cames (30) caractérisé en ce que les doigs de mise en forme (20) sont à commande forcée au moyen de deux disques de guidage (34 et 36), les doigts de mise en forme ayant leur point de rotation dans un disque de guidage (34 et 36).

7. Dispositif selon la revendication 5 ou 6, caractérisé en ce que les doigts de mise en forme (20) sont réalisés, à leur extrémité inférieure de guide-fil, comme une tête de champignon (24) présentant des rainures guide-fil qui basculent d'une zone externe dans une zone interne des lamelles (32) et en ce que la tête de champignon (24) s'abaisse dans la zone interne des lamelles (32).

8. Dispositif selon l'une des revendications 4, 5, 6 et 7, caractérisé en ce qu'après la fabrication d'un enroulement ondulé, des racleurs (16) poussent cet enroulement axialement vers l'avant sur le gabarit de bobinage (14) en direction de l'extracteur (18).
